Europäisches Patentamt

European Patent Office

Office européen des brevets

(11) Veröffentlichungsnummer: **0 000 913**
A1

(12) # EUROPÄISCHE PATENTANMELDUNG

(21) Anmeldenummer: 78100662.2

(22) Anmeldetag: 14.08.78

(51) Int. Cl.²: **F 24 J 3/02, G 02 B 5/10**

(30) Priorität: 26.08.77 DE 2738595

(43) Veröffentlichungstag der Anmeldung: **07.03.79**
**Patentblatt 79/5**

(84) Benannte Vertragsstaaten: **BE CH FR GB NL**

(71) Anmelder: **MASCHINENFABRIK AUGSBURG-NÜRNBERG Aktiengesellschaft, Dachauer Strasse 667, D-8000 München 50 (DE)**

(72) Erfinder: **Wildenrotter, Karl, Motorstrasse 33, D-8000 München 40 (DE)**

(54) **Reflektor für Sonnenkollektoren.**

(57) Reflektor für Sonnenkollektoren bestehend aus einer verspiegelten Glasplatte (23). Zur Minimierung der durch die Glasplatte absorbierten Strahlenenergie ist eine dünne Glasplatte vorgesehen, deren Plattenstärke unterhalb der für eine selbsttragende Glasplatte erforderlichen Glasstärke liegt. Diese Glasplatte ist mit ihrer verspiegelten Seite auf einen Stützkörper (22), insbesondere auf einen wabenartigen Stützkörper, aufgeklebt.

EP 0 000 913 A1

- 1 -

gü/sd

MASCHINENFABRIK AUGSBURG-NÜRNBERG
Aktiengesellschaft

München, den 7. August 1978

Reflektor für Sonnenkollektoren

Die Erfindung bezieht sich auf einen Reflektor für Sonnenkollektoren mit einer einseitig verspiegelten Glasplatte.

Die Güte eines derartigen Reflektors hängt von der Verspiegelung, der Flächengeometrie sowie von der lichtdurchlässigen Schicht, nämlich der Glasdicke ab. Die Flächengeometrie hat insbesondere einen großen Einfluß bei konkaven Reflektoren, die zur Bündelung der auf ihnen einfallenden Strahlen.dienen.

Zum Schutz der Reflektionsfläche und zur Erzeugung einer
entsprechend glatten Oberfläche befindet sich die Verspiegelung in üblicher Weise an der Rückseite der Glasplatte. Dadurch entstehen Energieverluste durch Absorption,
weil die Strahlung die Glasscheibe zweimal durchqueren muß.

7.1706

Der Erfindung liegt die Aufgabe zugrunde einen Reflektor der eingangs genannten Art dahingehend zu verbessern, daß die Energieverluste gegenüber den herkömmlichen Reflektoren verringert werden.

Die Aufgabe ist erfindungsgemäß dadurch gelöst, daß eine verspiegelte Glasplatte vorgesehen ist, bei der die Plattendicke unterhalb der für eine selbsttragende Glasplatte erforderlichen Dicke liegt, und daß die Glasplatte mit ihrer verspiegelten Seite auf einen Stützkörper aufgeklebt ist.

Hierdurch ist ein selbsttragender Reflektor erreicht, der nur eine dünne Glasschicht aufweist, durch die die einfallenden und reflektierenden Strahlen hindurch müssen. Die Energieabsorption durch die Glasplatte wird somit verringert. Insbesondere bei gebogenen Reflektoren hat die erfindungsgemäße Ausführung den weiteren Vorteil, daß die Formgebung des Reflektors leichter und genauer hergestellt werden kann. Zylinderartige Formen lassen sich leicht durch Kaltverformung einbringen, wobei durch eine sorgfältig bearbeitete Auflagefläche des Stützkörpers ein Reflektor mit hoher Genauigkeit in der Flächengeometrie hergestellt werden kann.

Um bei der Aufbringung der Glasplatte auf den Stützkörper Beschädigungen der Verspiegelung zu vermeiden, ist gemäß einer weiteren Ausgestaltung der Erfindung eine Folie vorgesehen, die zwischen der Glasplatte und dem Stützkörper eingeklebt ist. Die Zwischenfolie hat den weiteren Vorteil, daß auf der einen Seite ein für die Verspiegelung geeigneter Klebstoff verwendet werden kann und auf der anderen Seite ein anderer für die Verbindung mit dem Stützkörper geeigneter Klebstoff genommen werden kann.

7.1706
07.08.1978

Kollektoren werden in der Regel in einer Vielzahl zu einer Kollektoranlage zusammengefaßt. Zu diesem Zweck werden die Kollektoren nebeneinander mit einem Traggestell verbunden und miteinander verschaltet. Im Fall der Parabolsonnenkollektoren werden die Reflektoren und die dazugehörigen Absorber als getrennte Bauelemente mit dem Traggerüst verbunden. Für derartige Fälle sieht die Erfindung vor, daß an den Reflektoren Befestigungsmittel vorgesehen sind, die mit Abstand von der Glasplatte am Stützkörper angebracht sind. Hierdurch wird eine verformungsarme Aufhängung des Reflektors erreicht, bei der Dehnungen und Spannungen der Verbindungsstellen nicht auf den Reflektor geleitet sondern vom Stützkörper aufgenommen werden. Um diesen Effekt zu verstärken können aus dem Stützkörper herausgearbeitete Laschen oder am Stützkörper angebrachte elastische Elemente, wie z.B. Gummiblöcke zur Anbringung der Befestigungsmittel vorgesehen werden.

Vorteilhaft ist es, wenn der Stützkörper im wesentlichen aus einer Auflageplatte und daran befestigten Versteifungslamellen besteht. Hierdurch sind im Gewicht leichte Konstruktionen von Reflektoren möglich, die außerdem beispielsweise aus dünnen Aluminiumblechen hergestellt sein können, um dem Reflektor ein minimales Gewicht zu verleihen. Der Stützkörper kann aber auch aus einem Kunststoff oder Schaumkörper hergestellt sein.

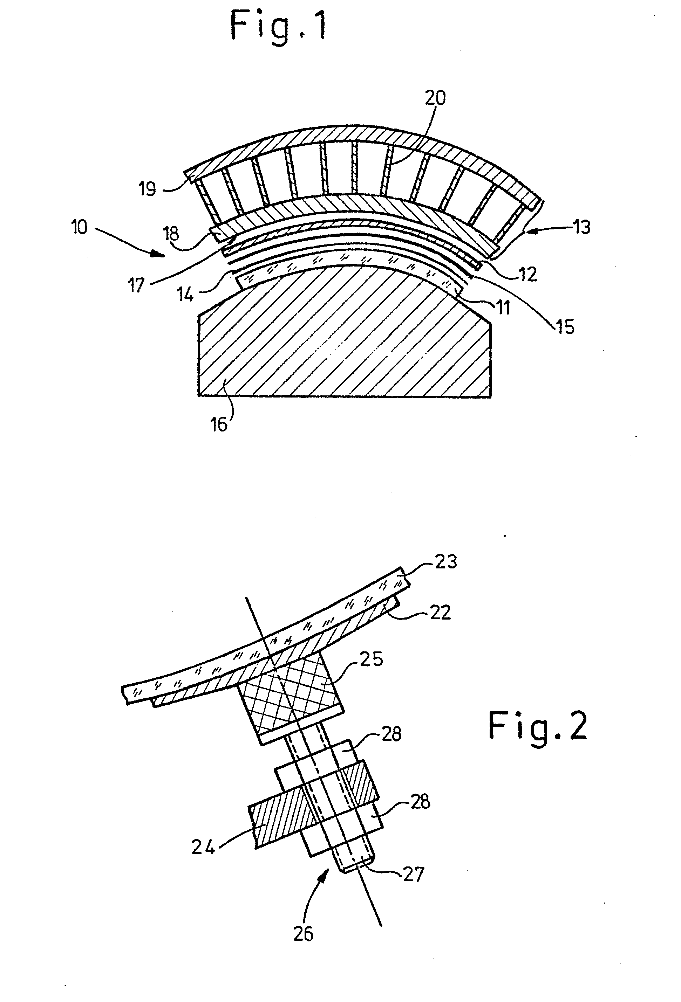

In der Zeichnung sind Ausführungsbeispiele der Erfindung schematisch dargestellt. In Fig. 1 ist ein Parobolreflektor 10 zerlegt und im Schnitt dargestellt. Der Reflektor besteht aus einer Glasplatte 11 einer Folie 12 und einem

7.1706
07.08.1978

0000913

Tragkörper 13. Die Glasplatte 11 ist auf einer Seite mit einer Verspiegelungsschicht 14 versehen, die mit einem Lacküberzug 15 zum Schutze der Verspiegelung abgedeckt wird.

Der dünne Spiegel 11, 14, 15 wird über eine Form 16 gebogen. Danach wird die Folie 12 auf die verspiegelte Seite aufgeklebt. Durch geeignete Wahl der Folienstärke kann ein optimales Verhältnis von Zug zu Schubspannung, die beim Biegen auftreten, eingestellt werden. Die Folie kann aus Metall und/oder Glasfaser bestehen. Anschließend wird der Stützkörper 13 mit vorgefertigter gebogener Auflagefläche 17 auf die Folie 12 geklebt. Es ist aber auch möglich, bei geeigneter Werkstoffwahl die Folie 12 wegzulassen.

Der Stützkörper 13 besteht aus einer Auflageplatte 18, die durch eine wabenartige Versteifung 20 und eine Grundplatte 19 in ihrer Form gehalten und verstärkt wird. Die Versteifung 20 kann auch aus Lamellen oder zickzackartig gebogene Fläche gebildet sein.

Durch entsprechende Werkstoffwahl und Dimensionierung kann erreicht werden, daß der Reflektor 10 leicht im Gewicht und flach im Aufbau ist und trotzdem die notwendige Festigkeit und Steifigkeit hat, die der Glasspiegel alleine nicht aufbringen würde.

In Fig. 2 ist ein Reflektor mit einem aus dickem Blech bestehenden Stützkörper 22 gezeigt, auf dem ein Spiegelglas 23 aufgeklebt ist. Für die Befestigung des Reflektors

7.1706
07.08.1978

an ein Traggerüst 24 sind Gummiblöcke oder aus elastischem Kunststoff bestehende Blöcke 25 oder metallischer Federbleche auf die Rückseite des Stützkörpers 22 aufgeklebt. Diese Blöcke dienen zur elastischen Halterung von Befestigungselementen 26, die aus einer mit dem Block festverbundenen Schraube 27 und einem Mutterpaar 28 bestehen.

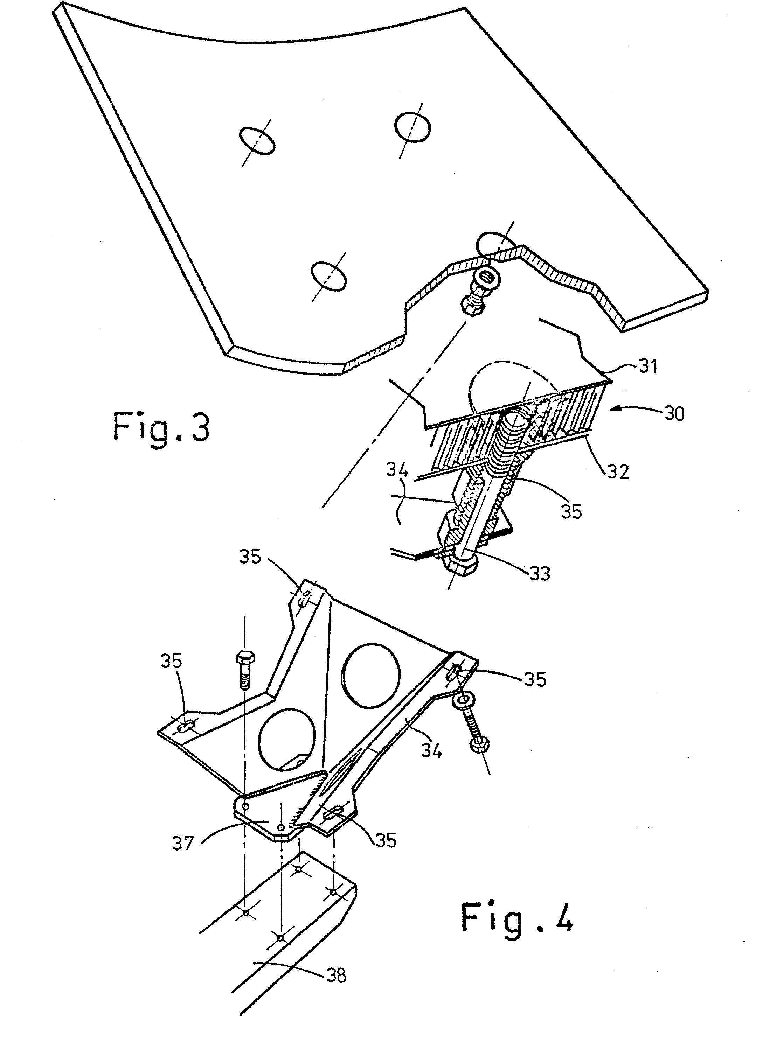

Eine weitere Variante der Befestigungsmöglichkeit ist in Fig. 3 gezeigt. Ein verstärkter Stützkörper 30, der Art wie der Stützkörper 13 aus Fig. 1, ist zwischen der Abdeckplatte 31 und der Grundplatte 32 an der Verbindungstelle mit einem Gießharz ausgefüllt. In diesem Harz wird ein Gewindeeinsatz eingegossen oder ein Befestigungsbolzen 33 zur Befestigung des Reflektors an eine Halterung 34 eingeschraubt. Zur Unterstützung dient eine zweiteilige Schraubvorrichtung 35, die miteinander verschraubt werden können und von der ein Teil am Stützkörper 30 und das andere Teil an der Halterung 34 befestigt ist. Die Schraubverbindung 35 dient zur Justierung des Abstandes zwischen dem Tragkörper 30 und der Halterung 34 und übernimmt außerdem die Stützlast des Reflektors.

Die Halterung 34 kann entweder direkt das Traggerüst oder ein Zwischenelement, wie es in Fig. 4 gezeigt ist, sein. Die Halterung 34 gemäß Fig. 4 wird an vier Punkten mit dem Reflektor bzw. dem Stützkörper in einer der bereits beschriebenen Art oder ähnlichen Weise verbunden, wozu drei oder vier Verbindungsstellen 35 vorgesehen sind. Der Abstand zwischen diesen Befestigungspunkten ist so ausgelegt, daß die durch einen Wind auftretende Beanspruchung auf ein

7.1706
07.08.1978

Minimum reduziert wird. Eine an die Halterung 34 angeklebte oder angeschweißte Platte 37 dient mit zur Befestigung der Halterung 34 an das Traggerüst 38. Anstelle einer getrennten Platte 37 kann auch eine herausgeformte Lasche vorgesehen sein. Diese Konstruktion ermöglicht eine flexible Aufhängung des Reflektors, so daß der Reflektor auch bei durch Wind hervorgerufenen Bewegungen kaum Spannungen oder Verformungen erfährt.

7.1706
07.081978

- 7 -   ·0000913

Patentansprüche:

1. Reflektor für Sonnenkollektoren mit einer einseitig verspiegelten Glasplatte, dadurch gekennzeichnet, daß eine Glasplatte (11) vorgesehen ist, bei der die Plattendicke unterhalb der für eine selbsttragende Glasplatte erforderlichen Glasstärke liegt, und daß die Glasplatte mit ihrer verspiegelten Seite auf einen Stützkörper (13) aufgeklebt ist.

2. Reflektor nach Anspruch 1, dadurch gekennzeichnet, daß zwischen der Glasplatte (11) und dem Stützkörper (13) eine Folie (12) eingeklebt ist.

3. Reflektor nach Anspruch 1 oder 2, dadurch gekennzeichnet, daß Befestigungsmittel (26) vorgesehen sind, die mit Abstand von der Glasplatte (23) am Stützkörper (22) angeordnet sind.

4. Reflektor nach einem der vorhergehenden Ansprüche, dadurch gekennzeichnet, daß der Stützkörper (13) aus mindestens einer Auflageplatte (18) besteht, mit der lamellenartige Versteifungen (20) verbunden sind.

7.1700
07.08.1978

Fig.1

Fig.2

Fig.3

31

30

32

34

35

33

35

35

37

35

34

35

38

Fig.4

**Europäisches Patentamt**

**EUROPÄISCHER RECHERCHENBERICHT**

Nummer der Anmeldung

0 0009 13

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | F 24 J 3/02 G 02 B 5/10 |
| X | DE - A - 2 152 642 (JAECKEL) <br><br> * Seite 2, Absätze 2,3; Seite 3, Absatz 1; Seite 5, Absätze 2 bis 4; Seite 6, Absätze 1,2; Seite 7, letzter Absatz; Seite 8, Absätze 1 bis 3; Seite 9, Absätze 1 bis 3; Seite 10, Absatz 1; Figuren 1 bis 4 * | 1,2 | |
| | FR - A - 2 111 683 (DEUTSCHE GOLD- UND SILBER-SCHEIDEANSTALT) <br><br> * Seite 1, Zeilen 37-40; Seite 2, Zeilen 1-40; Figuren 1,2 * | 1,2 | **RECHERCHIERTE SACHGEBIETE (Int. Cl.²)** <br><br> F 24 J <br> G 02 B <br> F 21 V |
| | US - A - 3 906 927 (CAPLAN) <br><br> * Spalte 5, Zeilen 10-68; Spalte 6, Zeilen 1-52; Figuren 1 bis 7 * | 1,3,4 | |
| | US - A - 3 841 738 (CAPLAN) <br><br> * Spalte 5, Zeilen 54-68; Spalte 6, Zeilen 1-68; Spalte 7, Zeilen 1-68; Spalte 8, Zeilen 1-8; Figuren 2 bis 6 * | 1,4 | |
| | US - A - 4 035 065 (FLETCHER) <br><br> * Spalte 5, Zeilen 32-68; Spalte 6, Zeilen 1-68; Spalte 7, Zeilen 1-33; Figuren 1 bis 6 * | 1 | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument |
| | CH - A - 571 199 (FAVARGER) <br><br> * Ganzes Dokument * <br><br> ./. | 1 | L: aus andern Gründen angeführtes Dokument <br> &: Mitglied der gleichen Patent- familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 04-12-1978 | BOETS |

Europäisches
Patentamt

**EUROPÄISCHER RECHERCHENBERICHT**

Nummer der Anmeldung

0000913

EP 78 10 0003

-2-

| | EINSCHLÄGIGE DOKUMENTE | . | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>GB - A - 915 547</u> (FORD MOTOR)<br>* Seite 2, Zeilen 28-130; Seite 3, Zeilen 1-52; Figuren 1 bis 4 *<br><br>--- | 1 | |
| | <u>US - A - 3 694 059</u> (SHAKESPEARE)<br>* Spalte 2, Zeilen 30-68; Spalte 3, Zeilen 1-41; Spalte 4, Zeilen 1-9; Figuren 1 und 2 *<br><br>--- | 3,4 | |
| | <u>US - A - 3 977 773</u> (HUBBARD)<br>* Spalte 3, Zeilen 4-68; Spalte 4, Zeilen 1-68; Spalte 5, Zeilen 1-39; Figuren 2 bis 6 *<br><br>--- | 3 | RECHERCHIERTE SACHGEBIETE (Int.Cl.²) |
| | <u>CH - A - 500 498</u> (LA ROCHE)<br>* Spalte 2, Zeilen 6-34; Figuren 1 und 2 *<br><br>--- | 4 | |
| | <u>US - A - 3 600 257</u> (REINHARDT)<br>* Spalte 2, Zeilen 28-72; Spalte 3, Zeilen 1-25; Figuren 2 und 3 *<br><br>--- | 4 | |
| | <u>US - A - 3 912 380</u> (KLEIN)<br>* Spalte 2, Zeilen 24-68; Spalte 3, Zeilen 1-32; Figuren 1 bis 4 *<br><br>--- | 4 | |
| P | <u>DE - A - 2 638 032</u> (SWAROVSKI)<br>* Seite 5, Absätze 5,6; Seiten 6-13 *<br><br>---    ./. | 1,2 | |

EPA Form 1503.2  06.78

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| P | <u>FR - A - 2 345 736</u> (C.E.A.)<br>* Seite 1, Zeilen 4-24; Seite 2, Zeilen 39,40; Seite 3, Zeilen 1-40; Seite 4, Zeilen 1-14; Figuren 1 und 2 *<br>-- | 1,4 | |
| A | <u>FR - A - 853 346</u> (CHANCE)<br>* Ganzes Dokume  *<br>-- | 1 | |
| A | <u>US - A - 2 98    1</u> (COTTON)<br>* Ganzes Dok  *<br>- | 1 | RECHERCHIERTE SACHGEBIETE (Int. Cl.²) |
| A | <u>DE - B - 1 9</u>      (HERAEUS SCHOT<br>* Ganzes Dok  *<br>-- | | |

EPA Form 1503.2   06.78